# EUROPEAN PATENT APPLICATION

(11) **EP 2 778 956 A2**
(43) Date of publication of application: **17.09.2014**
(21) Application number: 13165229.9
(22) Date of filing: 24.04.2013
(51) Int. Cl.: G06F 17/30

(54) **Processing a link on a device**

(30) Priority: 13.03.2013 US 201313801437
(71) Applicant: BlackBerry Limited, Waterloo, ON N2K 0A7 (CA); 2236008 Ontario Inc., Waterloo, ON N2K 0A7 (CA)
(72) Inventor: Lahti, Nils Patrick, Kanata, ON K2K 0B3 (CA); El Mously, Khalid, Kanata, ON K2K 0B3 (CA); Ferguson, Geordon Thomas, Mississauga, ON L4W 0B5 (CA); Staikos, George Ross, Toronto, ON M4P 3A2 (CA)
(74) Representative: Finnie, Peter John

(57) **Abstract**

Systems, methods, and software can be used to process a link on a device. In some aspects, a link is received on a device. The link can be a link to content stored external to the device. The link can be selected by a user and associated with a first perimeter on the device. Based on the link and independent of user input, the device automatically determines whether to invoke an application in a second perimeter on the device to access the external content

## Description

### CLAIM OF PRIORITY

This application claims priority to U.S. Patent Application No. 13/801,437 filed on March 13, 2013, the entire contents of which are hereby incorporated by reference.

### BACKGROUND

The present disclosure relates to processing a link on a device. Many communication devices are able to access content through browsers or other software applications that are configured to retrieve content based on a link, such as a uniform resource locator (URL). Often these links represent the location of some content stored externally to the device. The external content can include a web page, a data file, or a media file.

### DESCRIPTION OF THE DRAWINGS

FIG. 1 is a schematic diagram showing an example communication system.

FIG. 2 is a schematic diagram showing content access in an example communication system.

FIG. 3 is a flowchart showing an example process for accessing external content.

Like reference numbers and designations in the various drawings indicate like elements.

### DETAILED DESCRIPTION

Security implications associated with accessing content on a device can be balanced with other concerns, such as speed, convenience, user experience, etc. Although corporate and personal data, software, and other applications can be segregated on a device, there may be instances where resources can be shared (e.g., for improved speed or data accessibility) without compromising security. For example, when a user clicks on a URL link in a corporate email (e.g., in a corporate perimeter), the device may automatically decide whether to use a browser application in the corporate perimeter or a browser application in a personal perimeter to access the link. As another example, if a URL link is highlighted and copied to the device's clipboard in the corporate perimeter, the URL link can be tagged in the clipboard as corporate data. If the URL is then pasted (or otherwise accessed) in an application in a non-corporate perimeter, the device may automatically decide whether the non-corporate application may access the link. As another possibility, the device may automatically decide not to paste the URL in the application running in the non-corporate perimeter.

A communication device can decide which perimeter's network resources are appropriate for accessing the link. In either of the examples described above and in other scenarios, the device can generate an automated, intelligent decision based on the link itself, and in some instances (e.g., for links associated with sensitive corporate data), the decision can prohibit the device from accessing content over networks that are not approved for the corporate perimeter. In some instances (e.g., for links associated with approved content providers), the decision may allow the device to retrieve the content faster or more conveniently, for example, through a non-corporate WiFi network or a cellular data network. In some cases, by analyzing the link itself in an automated and systematic manner, the device can satisfy security or confidentiality considerations while providing improved speed and convenience, and an improved user experience. The techniques described here may also enable flexibility in accessing external content on a device with multiple perimeters. For example, in some cases, one perimeter may be better suited for one type of link or external content than a different perimeter; or multiple perimeters may be suited to access the link while others are not.

Perimeters can be implemented as groups of resources having a common management scheme, where each perimeter generally includes one or more resources and one or more policies regarding use of or access to the one or more resources. Perimeters may be implemented on data communication systems that include a device, and can be used to logically separate information (e.g., files, applications, certificates, configuration data, network connections, data, and the like) on the device. For example, the device can implement two or more perimeters, which can include a personal perimeter, an enterprise or work perimeter, any suitable combination of these and other types of perimeters. In some implementations, the device may include multiple personal perimeters, multiple enterprise perimeters, or both. A personal perimeter can be managed by a device user, and an enterprise perimeter can be managed by an enterprise or corporate administrator. In some implementations, the enterprise or corporate administrator can additionally manage the personal perimeter or the device or both. A device purchased, owned, or otherwise provided by an enterprise, employer or corporation may generally be referred to as a corporate-liable device, while a device purchased, owned or otherwise provided by an employee or individual may generally be referred to as a personal-liable device or an individual-liable device.

In some implementations, each perimeter on a device (e.g., enterprise or personal) has its own file system on the device, and separation between perimeters can be provided, at least partially, by the separation of the file systems on the device. In some cases, some of the resources of each perimeter (e.g., data and policies) are stored in a dedicated file system for the perimeter, while other resource of each perimeter (e.g., applications) are stored outside of the dedicated file system.

Separation of file systems can be logical, physical, or both. A physical separation of file systems can be implemented, for example, by designating physically separate memory locations (e.g., separate memory devices, or separate blocks in the same memory) for each file system. A logical separation of file systems can be implemented, for example, by designating logically separate data structures (e.g., separate directories, etc.) for each file system. In some implementations, each file system has its own encryption parameters. For example, the file system for a corporate perimeter can have its own encryption key and a higher encryption strength, while a file system for a personal perimeter can have its own encryption key and lower encryption strength. In some instances, the file system for the personal perimeter has the same encryption strength as the corporate perimeter, or the file system for the personal perimeter can be unencrypted.

As described above, a perimeter can include a group of resources that share a common management scheme governing the use of resources in the group and can encompass both the resources and the management policies that describe how the resources may be used. The management policies can include security restrictions, which can be defined for the perimeter. Applications executable by the device can include resources that, when executed, request access to other resources or provide resources to other applications (or both). For an application that is assigned to or associated with a perimeter, resources included in the application can be included in the group of resources included in the perimeter. Further, security restrictions defined for the perimeter can restrict the application to resources included in the group. Thus, when the application is executed within the perimeter, security restrictions included in the management policies of the perimeter can determine whether or not the resources associated with the application can access other resources, such as resources included in the group or resources outside the group (or both), or grant access to other applications, such as applications assigned to or associated with or not assigned to or associated with the perimeter (or both).

When a resource (e.g., an application) is "launched into" a perimeter, an instance of the application is instantiated in the perimeter. The management policy of the perimeter where an application is launched can determine, at least partially, what resources (e.g., data resources, network resources, etc.) the application can access or execute. As such, when an instance of an application is running in a perimeter, permissions for the instance of the application are determined based at least partially on the management policy of the perimeter. For some applications, access to resources outside a perimeter can be determined, at least partially, based on the policies of the other perimeter.

In some implementations, a secure perimeter can divide or segregate different categories of data (e.g., work data, personal data, etc.) from the operating system level all the way to the user interface. As such, the perimeter architecture can provide protection of data at the operating system level, the file level, the user interface level, and other levels of the device. A secure perimeter can, in some cases, ensure a complete separation between the different categories of data, applications and the user experience, while at the same time also allowing the different categories of data to coexist in the same application and share data when desired. A secure perimeter can allow for "hybrid apps," such as, for example, a unified inbox showing both personal and corporate email. In some instances, applications can be limited to an individual perimeter view (e.g., a "work" or "personal" perimeter view). For example, a social networking application can be configured to appear only in the personal perimeter. In some instances, separate instances of the same application can run in multiple perimeters. For example, a device can have an instance of a social networking application (e.g., Facebook, Twitter, etc.) running in a personal perimeter for a user's personal account, and the device can have an instance of the same social networking application running in a corporate perimeter for the user's company or the user's corporate account.

In some aspects, a link could be selected from an e-mail, a web page, clipboard data, a document, an application, or other sources on a device. In some instances, it may be more appropriate for the link to be accessed from a specific perimeter or multiple specific perimeters. The appropriate perimeter or appropriate perimeters for accessing the link may not be the originating perimeter in which the link was selected. For example, if a link to an enterprise web site is selected from a personal perimeter, it may be more appropriate for that link to be accessed from an application in an enterprise perimeter. Likewise, a link selected in an enterprise perimeter may be better accessed through a personal perimeter. Opening a link in a different perimeter may be more appropriate for any of several reasons, including better compliance with security or enterprise policies, more efficient access to available network resources, more efficient use of device resources, user preferences, or other reasons.

The device can use an invocation framework module within the device to determine which perimeter is approved or appropriate for accessing a selected link. The invocation framework module can include logic, software, hardware, or a combination of them configured to invoke an application on the device for a specified task. For example, the invocation framework module can receive information on a file, a link, or another type of data, and determine what application on the device should be invoked to open, execute, or otherwise process the subject file, link or other data. The invocation framework can make this determination by itself or interface with a decision logic module. The invocation framework (and possibly the decision logic) can analyze the link. The invocation framework can analyze part or all of the link. For instance, the entire link may be recognized, or only the domain of the link may be the signifier. In some implementations, the decision logic can communicate with a DNS server (such as an enterprise DNS server) to retrieve information related to the link, such as an enterprise policy for the link.

After, or in connection with, determining which perimeter is approved or appropriate for accessing the link, the invocation framework can also determine which application in the perimeter is approved or appropriate for accessing the link. For example, the best suited application may be a web browser, media player, e-mail application, or other application. The application can then access the content through the designated application or perimeter. For example, for links to external content, the designated application may access the external content through a network associated with the application's perimeter. As another example, for links to internal content, the designated application may access the internal content through a file system associated with the application's perimeter. In some instances, this enables the application, the link, and the external content to comply with the policies and procedures associated with that perimeter.

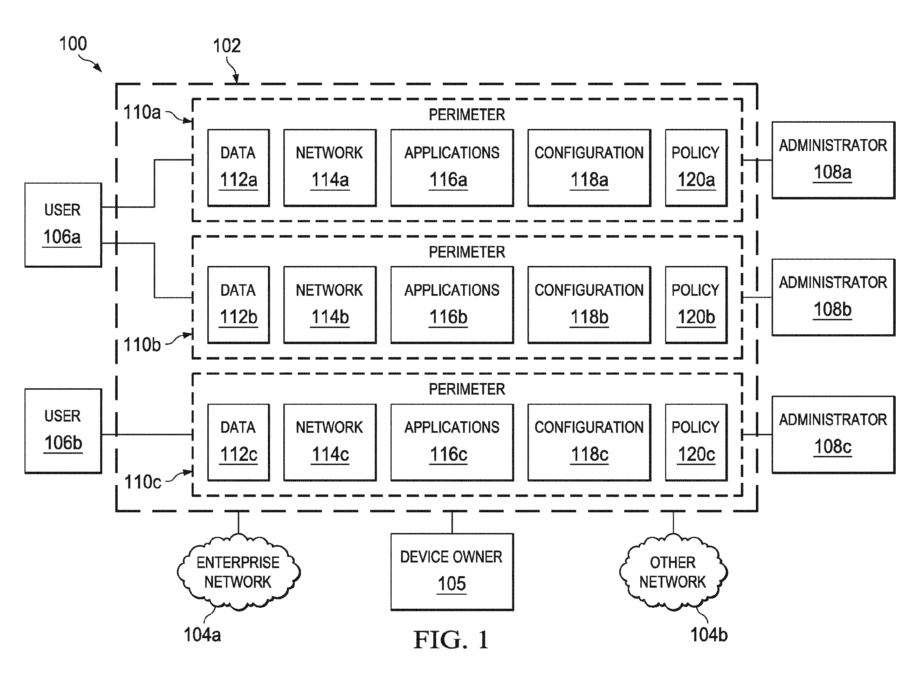

FIG. 1 is a schematic diagram showing an example data communication system 100. The example data communication system 100 includes a device 102, an enterprise network 104a, and one or more other networks 104b. A data communication system may include additional, different, or fewer features, as appropriate. The diagram in FIG. 1 also shows interactions by users 106a, 106b, by a device owner 105, and by administrators 108a, 108b, 108c. In some cases, the device owner 105 can be one of the users 106a or 106b, a business enterprise, or another entity. Additional, different, or fewer entities may interact with a data communication system, as appropriate in various implementations.

The device 102 can be any suitable computing device. Generally, a computing device includes a computer-readable medium and data processing apparatus. The computer-readable medium may include any suitable memory, disc, storage device, or other apparatus configured to store machine-readable information. The computer-readable medium can store instructions that are executable by the data processing apparatus. The data processing apparatus can include any suitable processor, controller, circuitry, or other apparatus configured to perform operations based on machine-readable instructions. The data processing apparatus can include a programmable processor, digital logic circuitry, firmware, or any other suitable device. The computer-readable medium can include a single medium or multiple media, and the data processing apparatus can include a single apparatus or multiple apparatus. The computer-readable medium can be a propagated signal in which the operations described here can be encoded by an encoding process.

The example device 102 shown in FIG. 1 is operable to receive requests from the user via a user interface, such as a graphical user interface or any other suitable user interfaces. As shown in FIG. 1, the device 102 is communicably coupled to the enterprise network 104a and to one or more other networks 104b. The example device 102 is operable to receive, transmit, process and store any appropriate data. For example, the device 102 can comprise a smartphone, a tablet computer, a personal computer, a laptop computer, a personal data assistant (PDA), or another type of user device. The device 102 may include an input device, such as a keypad, touch screen, mouse, or other device that can accept information, and an output device (e.g., display screen) that conveys information associated with the operation of the resources. Both the input device and output device may include fixed or removable storage media (for example, memory, etc.) to both receive input from and provide output to users through the display.

As shown in FIG. 1, the example device 102 includes three example perimeters 110a, 110b, and 110c (individually and collectively referred to as "perimeters 110"). Each perimeter 110 includes data 112, network access resources 114, one or more applications 116, one or more configuration files 118, and one or more policies 120. A perimeter 110 may include only a subset of the illustrated resources, or a perimeter 110 may include additional or different resources.

The example perimeters 110 can logically separate resources (e.g., applications, data, network access resources, configuration files, etc.) such that resources in a given perimeter can, in some instances, be prevented from accessing resources included in a different perimeter. For example, personal resources in one perimeter may be prevented from accessing corporate resources in another perimeter, or vice-versa. In some cases, an enterprise may extend a secured perimeter on a single user device without interfering with the user's personal experience on the same device. The perimeters may also permit cross-perimeter access to resources. Access to perimeter resources may be controlled by defining, assigning or otherwise associating a policy to each perimeter.

A policy for a perimeter can be implemented in any suitable format, using any appropriate information. A policy can specify access to both the resources in another perimeter that can be accessed by applications running in the perimeter and resources in the perimeter that can be accessed by applications running in another perimeter. For example, a given perimeter's policy may identify other perimeters that are accessible, resources that are not accessible to other perimeters, or both. A perimeter's policy may identify specific users that can or cannot access specified resources in the perimeter. In some implementations, the policies from both perimeters determine whether cross-perimeter access is granted.

In some cases, a perimeter architecture can enable a logical separation of computing resources such that transferring data between perimeters and accessing resources of other perimeter can be controlled. Resources may include applications, file systems, network access, or other computer resources. In addition to enabling access to resources within a perimeter, the example data communication system 100 may include a policy that identifies specific external resources that a resource in a perimeter may access. The example data communication system 100 may manage a seamless user experience in which the perimeter concept is executed.

A perimeter 110 may include password protection, encryption, and other process for controlling access to resources assigned to the perimeter. A perimeter 110 may be generated by the device owner, a user, an administrator, or others. In some examples, the perimeter 110a may be a personal perimeter created for the user 106a and managed by the user 106a. A personal perimeter can be used, for example, to store and access personal data on the device, to implement personal preferences with respect to applications on the device, to allow the device to interface with personal data or personal networks, or for other purposes related to personal use. In some examples, the perimeter 110b may be an enterprise perimeter created by an administrator 108b for an enterprise and may be managed by a remote management server. An enterprise perimeter can be used, for example, to implement enterprise policies on the device, to restrict access to (or distribution of) enterprise data, to allow the device to interface with enterprise data systems, or for another purpose related to an enterprise. In addition, a given perimeter may be accessed by the device owner 105, a user, an administrator, or any suitable combination. In some implementations, each perimeter may be associated with a single user, and at least some users may access multiple device perimeters. For example, the first user 106a may access resources within both the perimeter 110a and the perimeter 110b, and the second user 106b may have access to only one perimeter 110c.

In some instances, individual perimeters may be added, deleted, or modified. The device owner 105 may have the ability to add or remove individual perimeters 110 from the device 102. In some implementations, a user can create a perimeter. In some instances, an organization associated with the enterprise network 104a can send the device information identifying the initial resources (e.g., applications, policies, configurations, etc.) for a new perimeter. A perimeter administrator may assign policies for the perimeters and initiate perimeter updates. In some implementations, perimeter administrators can remotely lock or wipe a perimeter.

Information may be stored on the device 102 in any suitable memory or database module. Example memories include volatile and non-volatile memory, magnetic media, optical media, random access memory (RAM), read-only memory (ROM), removable media and others. The data 112 can include any suitable information. The device 102 can store various objects, including files, classes, frameworks, backup data, business objects, jobs, web pages, web page templates, database tables, repositories storing business or dynamic information, and any other appropriate information including any parameters, variables, algorithms, instructions, rules, constraints, or references thereto. The data 112 may include information that is associated with an application, a network, a user, and other information.

The network access resources 114 can include any suitable parameters, variables, policies, algorithms, instructions, settings, or rules for granting access to networks. For example, the network access resources 114a may include or identify firewall policies for accessing the enterprise network 104a. As another example, the network access resources 114b may include or identify account data for accessing one or more of the other networks 104b. In some implementations, network access resources include or otherwise identify one or more of the following: a username; a password; a security token; a Virtual Private Network (VPN) configuration; firewall policies; a communication protocol; encryption key certificate; or others.

The applications 116 can include any suitable program, module, script, process, or other object that can execute, change, delete, generate, or process information. For example, applications can be implemented as Enterprise Java Beans (EJBs). Design-time components may have the ability to generate run-time implementations into different platforms, such as J2EE (Java 2 Platform, Enterprise Edition), ABAP (Advanced Business Application Programming) objects, or Microsoft's .NET. Further, while illustrated as internal to the device 102, one or more processes associated with the applications 116 may be stored, referenced, or executed remotely. For example, a portion of the applications 116 may be an interface to a web service that is remotely executed. Moreover, the applications 116 may be a child or sub-module of another software module (not illustrated).

The configuration files 118 can include any suitable parameters, variables, policies, algorithms, instructions, settings, or rules for configuring software of the device 102. For example, the configuration files 118 may include a table that identifies settings for one or more applications 116. In some implementations, the configuration files 118 identify initial settings for one or more applications 116, and for other types of applications such as operating system settings. The configuration files 118 may be written in any suitable format, such as, for example, ASCII and line-oriented, etc.

The policies 120 may include any parameters, variables, policies, algorithms, instructions, settings, or rules for enabling or preventing access to resources in one or more perimeters. For example, the policies 120a may identify a resource outside the perimeter 110a that is accessible by a resource inside the perimeter 110a. A policy of a given perimeter may include or otherwise identify the accessibility of the perimeter generally, the accessibility of specific resource in the perimeter, the ability of resources in the perimeter to access other perimeters, and other accessibility information. A policy may specify accessibility by user, action type, time period, or otherwise. In some implementations, a policy may identify specific resources of a perimeter that are accessible to external resources. For example, the policies 120a for the perimeter 110a may indicate that a specific application in another perimeter 110b may or may not access the data or resources in the first perimeter 110a. As another example, the policies 120a for the perimeter 110a may indicate that any of the applications in the other perimeters 110b or 110c may or may not access the data or resources in the first perimeter 110a.

In some implementations, policies 120 may define or otherwise identify a process for user authentication. For example, the policies 120 may identify the type and content of user authentication (e.g., password strength, lifecycle) to apply to a cross-perimeter request. When a user provides a request to access to multiple perimeters, the request may be evaluated by the policies of both perimeters. In some instances, if both policies grant access, then the cross-perimeter request may be granted.

The device 102 may be connected to multiple networks, such as the enterprise network 104a and the other networks 104b. The enterprise network 104a can include a wireless network, a virtual private network, a wired network, or any suitable network. The enterprise can be a corporate or business entity, a government body, a non-profit institution, or another organization. The enterprise may be the device owner 105. The enterprise may also lease the device 102 or may hire contractors or agents who are responsible for maintaining, configuring, controlling, or managing the device 102. The other networks 104b can include any suitable networks that are accessible by a user. For example, the other networks can include a public network that the user has an account for, a private network, an ad hoc network, or another type of network. In some cases, the other networks 104b include a cellular data network. In some cases, the other networks 104b include a user's home network.

The example networks 104a and 104b can facilitate communication with the device 102. Either of the networks 104a and 104b may communicate, for example, Internet Protocol (IP) packets, Frame Relay frames, Asynchronous Transfer Mode (ATM) cells, voice, video, data, and other suitable information between network addresses. In addition, while the enterprise network 104a and the other networks 104b are each illustrated as a single network, each network may include multiple networks and may provide access to additional networks. In short, the enterprise network 104a and the other networks 104b may include any suitable network configured to communicate with the device 102.

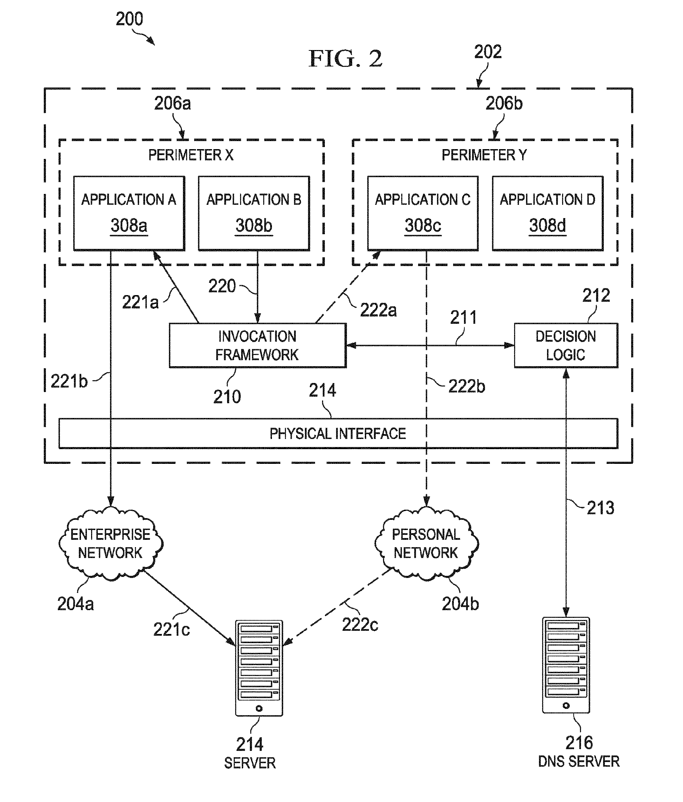

FIG. 2 is a schematic diagram showing content access in an example communication system 200. The example communication system 200 includes a device 202, an enterprise network 204a, a personal network 204b, a server 214, and a DNS server 216. The communication system 200 can include additional or different features, and the components of the communication system 200 may operate as shown in FIG. 2 or in another manner.

The example device 202 includes one or more perimeters 206a, 206b. While two perimeters are shown in this example for ease of illustration, the number of perimeters can be varied in other examples. Each perimeter can include one or more applications. For example, Perimeter X (206a) includes applications 308a, 308b, and Perimeter Y (206b) includes applications 308c, 308d. Each perimeter may contain its own applications or its own instantiation of the same application. For example, Application B (208b) can be a software application that can only be launched in Perimeter X (206a), and Application D (208d) can be a different software application that can only be launched in Perimeter Y (206b). As another example, Application C (208c) may be the same as Application A (308a), though each application runs as a separate instance in each perimeter. Each perimeter can also have one or more associated network resources. In the example shown in FIG. 2, Perimeter X (206a) is associated with the enterprise network 204a, and Perimeter Y (206b) is associated with the personal network (204b). Each perimeter has its own policies which are applied to applications and network resources associated with that perimeter (e.g. a resource management policy, a security policy, or other policies).

The physical interface 214 enables the user to interact with the device. The physical interface 214 can include a screen for conveying visual information, a keyboard, touchscreen, one or more microphones/speakers, mouse, or other interactive features. The example communications device 202 is configured to communicate with the enterprise network 204a and a personal network 204b. The enterprise network 204a can include a virtual private network of an enterprise, a private Wi-Fi network of an enterprise, a wired network of an enterprise, or another network that is administered by the enterprise. The personal network can include, for example, a publicly-accessible Wi-Fi network, a restricted-access Wi-Fi network, a cellular data network, a personal wireless network, or another type of network. The device can use the network resources provided by either network 204a, 204b to access external content stored in an external server 214. The external content can include a web page, a document, an object, media such as video or audio data, a data file, or other content that is not stored locally on the device.

In the example schematic of FIG. 2, a user selects a link inside Application B (308b). The link can include a URL, a URI, or other designation of content location. The Application B (308b) sends the link (at 220) to the invocation framework 210. The invocation framework 210 analyzes the selected link and determines which application (e.g. 308a-308d) is suited (e.g., best suited or otherwise acceptable) for accessing the external content that the link describes. The invocation framework 210 can make this determination independent of any user input. In some implementations, the invocation framework 210 uses decision logic 212 for this determination. The invocation framework 210 and the decision logic 212 may exchange data (via communication path 211); for example, the invocation framework 210 may send the link to the decision logic 212, and the decision logic 212 can send a decision to the invocation framework 210. The decision may indicate one or more specific applications or perimeters that are approved for accessing the link. In some implementations, the decision logic 212 communicates with a DNS server 216 via a communication path 213. Similar techniques can be used to analyze a link to internal data stored locally on the device. For example, the invocation framework 210 can receive a link to the internal content, and automatically decide which application is appropriate for accessing, rendering, executing, or otherwise processing the internal content.

In some example scenarios, the decision logic 212 analyzes the link and determines that the external content should be accessed by Application A (308a) in Perimeter X (206a). The invocation framework 210 receives the decision from the decision logic 212 and sends the link (at 221a) to Application A (308a). The Application A (308a) then attempts to access the external content on server 214 using the network resource associated with Perimeter X (206a). In this example scenario, the Perimeter X (206a) is associated with the enterprise network 204a. The arrows 221b, 221c show the communication path from the Application A (308a) through the enterprise network 204a to the external content stored on server 214.

In some example scenarios, the decision logic 212 determines that the external content should be accessed by Application C (308c) in Perimeter Y (206b). The invocation framework 210 sends the link to Application C (308c), which attempts to access the external content on server 214 via communication paths 222b, 222c and personal network 204b. While the external content can be the same as in the first example situation, the external content is ultimately accessed in a different perimeter with a different application and a different network resource. The decision logic 212 can identify the perimeter by analyzing the link to the external content.

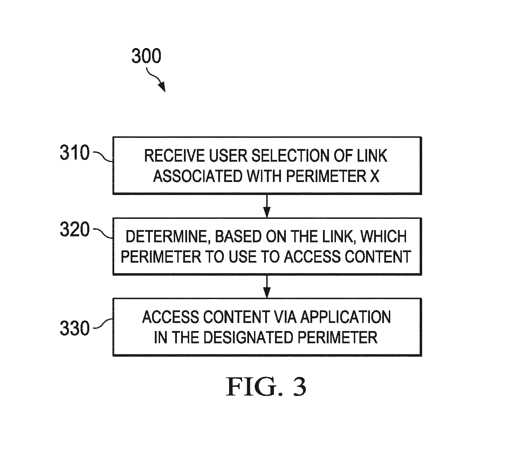

FIG. 3 is a flowchart showing an example process 300 for accessing external content. The process 300 can be implemented by a user device in a communication system. For example, the process 300 can be implemented by the device 102 shown in FIG. 1, the device 202 shown in FIG. 2, or by another type of system or module. For example, some or all of the process 300 may be performed by the example invocation framework 210 shown in FIG. 2, the example decision logic 212 shown in FIG. 2, or another type of software or hardware module. The example process 300 shown in FIG. 3 can be implemented using additional, fewer, or different operations, which can be performed in the order shown or in a different order.

At 310, a link associated with a perimeter is received. For example, the link may be received in response to a user selecting the link on the device, in response to an application on the device initiating contact with the link, or in response to other types of events. The link can be associated with a perimeter, for example, when the link is selected in the perimeter, pasted to the clipboard from the perimeter, initiated by an application running in a perimeter, etc. The link can be a URL or another type of address to specific content (e.g., a specific web page or other Internet content), or another type of link. In some examples, the link includes an IP address, an http link, an https link, or another type of link to network content. The link can be associated with the perimeter independent of whether the content is associated with the perimeter. In other words, a link may be associated to a perimeter even if the content is not associated to a perimeter.

Typically, the link that is received at 310 will be to a link to external content that is not stored on the device. The link that is received at 310 may alternatively be a link to content stored locally on the device (e.g., content associated with the same or a different perimeter, content that is not associated with a perimeter, etc.). In some example implementations, the link describes or is associated with content stored external to the device, such as content stored at a network server, and the link is selected from an application associated with a particular perimeter, and therefore the link is associated with the particular perimeter.

At 320, it is determined, based on the link, which perimeter to invoke to access the external content designated by the link. For example, the link may be analyzed to determine which perimeter or perimeters have network resources that are permitted to be used for accessing the content. No user interaction is required in the analysis or determination processes, although in some instances, a user may be prompted for confirmation or other input. In some implementations, a lookup table is used to determine in which perimeter the link should be accessed. A lookup table can include a list of links or link properties that designate when a link should be accessed in a certain perimeter. For example, if a selected link matches a listed link assigned to Perimeter X in the lookup table, then the selected link can be processed by an application in Perimeter X. The properties of the link itself can be used to determine which perimeter should process the link. For example, the domain name of the link can be used to determine which perimeter should process the link. For instance, links having a domain name affiliated with the enterprise may be designated as only being accessible in the perimeter associated with the enterprise network. In one implementation, expression pattern matching is used to analyze the link.

In some implementations, an invocation framework module interacts with a decision logic module to determine which perimeter to use to access the external content designated by the link. The invocation framework may also determine which application(s) within the chosen perimeter is/are appropriate to handle the selected link. For instance, a web browser application may be the appropriate application to access a link to a web page. The decision logic module can perform some or all of the analysis of the selected link, and perform some or all of the computation to determine which perimeter is appropriate. In some implementations, the decision logic module can use a network resource to communicate with a DNS server. In some implementations, the decision logic can perform a DNS lookup on an enterprise DNS server or some other server. The enterprise DNS server can send a supplemental record to the decision logic with a DNS response indicating what allowable transport mechanisms, perimeters, domains, browsers, network resources, etc. are authorized.

In some implementations, the device can scan text or context of work email, browser, applications, etc. to generate a list of domains, links, content, etc. to lookup ahead of time, and the infrastructure can whitelist the domains, links, content, etc. that are allowed and communicate that long list to the device in some kind of updated file or table. This lookup can be performed as a DNS lookup on an enterprise DNS server or some other server.

At 330, an application associated with the designated perimeter accesses the external content specified by the link. The application can do this, for example, using the network resource associated with the chosen perimeter. For instance, if the invocation framework has determined that the external content should be accessed in the perimeter associated with the enterprise network, then the application can use the enterprise network resource to access the external content. Similarly, if the invocation framework chooses a perimeter associated with a personal network, then the application can access the external content using the personal network resource.

In some aspects of what is described here, a device detects the selection of a link to external content stored external to the device. The link is associated with a first perimeter on the device. The device automatically determines whether to use an application in a second perimeter on the device to access the external content. The device makes this determination based on the link, without any user input.

Implementations of these and other aspects may include one or more of the following features. The link is selected in an application running in the first perimeter. An invocation module on the device can determine whether to access the external application using the application in the second perimeter. The application in the second perimeter accesses the external content by a network resource associated with that second perimeter.

Additionally or alternatively, implementations of these and other aspects may include one or more of the following features. An application to access the content is identified. A particular perimeter, of multiple perimeters available on the device, is identified to run the application. The application, the particular perimeter, or both can be identified based on the link and independent of user input.

Additionally or alternatively, implementations of these and other aspects may include one or more of the following features. The device automatically parses the link and analyzes components of the link. The device determines whether to use the application in the second perimeter to access the external content. The first perimeter is an enterprise perimeter, and the second perimeter is a personal perimeter.

A number of implementations have been described. Nevertheless, it will be understood that various modifications may be made. Other variations in the order of steps are also possible. Accordingly, other implementations are within the scope of the following claims.

The following are particularly preferred aspects according to the present disclosure.
Numbered clause 1. A method of accessing content by a device having at least two perimeters, the method comprising:
   detecting, on a device, a link to content stored external to the device, the link being associated with a first perimeter on the device; and
   automatically determining, based on the link and independent of user input, whether to invoke an application in a second perimeter on the device to access the content.
Numbered clause 2. The method of numbered clause 1, comprising, based on the link and independent of user input:
   identifying an application to access the content; and
   determining in which perimeter to run the application to access the content.
Numbered clause 3. The method of numbered clause 1, wherein the link is presented in an application running in the first perimeter.
Numbered clause 4. The method of numbered clause 1, wherein an invocation module on the device determines whether to access the content using the application in the second perimeter.
Numbered clause 5. The method of numbered clause 1, further comprising using the application in the second perimeter to access the content by a network resource associated with the second perimeter.
Numbered clause 6. The method of numbered clause 1, further comprising automatically parsing the link and analyzing one or more components of the link to determine whether to use the application in the second perimeter to access the content.
Numbered clause 7. The method of numbered clause 1, wherein the first perimeter comprises an enterprise perimeter and the second perimeter comprises a personal perimeter.
Numbered Clause 8. The method of numbered clause 1, wherein the link comprises a uniform resource locator (URL).
Numbered clause 9. The method of numbered clause 1, wherein the content comprises a web page.
Numbered clause 10. A device comprising:
   data processing apparatus; and
   a computer-readable medium storing:
      a first set of resources associated with a first management policy;
      a second set of resources that is logically separate from the first set of resources on the device and associated with a second management policy;
      instructions executable by the data processing apparatus to perform operations comprising:
         detecting, at the device, a link to content stored external to the device, the link being associated with the first set of resources; and
         automatically determining, based on the link and independent of user input, whether to invoke an application in the second set of resources to access the content.
Numbered clause 11. The device of numbered clause 10, wherein the link is selected in an application running in the first set of resources.
Numbered clause 12. The device of numbered clause 10, wherein an invocation module on the device determines whether to access the content using the application in the second set of resources.
Numbered clause 13. The device of numbered clause 10, the operations further comprising using the application in the second set of resources to access the content by a network resource associated with the second set of resources.
Numbered clause 14. The device of numbered clause 10, the operations further comprising automatically parsing the link and analyzing components of the link to determine whether to use the application in the second set of resources to access the content.
Numbered clause 15. The device of numbered clause 10, wherein the first set of resources comprises an enterprise perimeter and the second set of resources comprises a personal perimeter.
Numbered clause 16. One or more non-transitory computer-readable media storing instructions that are executable by one or more data processing apparatus to perform operations comprising:
   detecting, on a device, a link to content stored external to the device, the link being associated with a first perimeter on the device; and
   automatically determining, based on the link and independent of user input, whether to invoke an application in a second perimeter on the device to access the content.
Numbered clause 17. The computer-readable media of numbered clause 16, wherein the link is selected in an application running in the first perimeter.
Numbered clause 18. The computer-readable media of numbered clause 16, wherein an invocation module on the device determines whether to access the content using the application in the second perimeter.
Numbered clause 19. The computer-readable media of numbered clause 16, the operations further comprising using the application in the second perimeter to access the content by a network resource associated with the second perimeter.
Numbered clause 20. The computer-readable media of numbered clause 16, the operations further comprising automatically parsing the link and analyzing components of the link to determine whether to use the application in the second perimeter to access the content.
Numbered clause 21. The computer-readable media of numbered clause 16, wherein the first perimeter comprises an enterprise perimeter and the second perimeter comprises a personal perimeter.

## Claims

1. A method of accessing content by a device having at least two perimeters, the method comprising:
detecting, on a device, a link to content stored external to the device, the link being associated with a first perimeter on the device; and
automatically determining, based on the link and independent of user input, whether to invoke an application in a second perimeter on the device to access the content.

2. The method of any preceding claim, comprising, based on the link and independent of user input:
identifying an application to access the content; and
determining in which perimeter to run the application to access the content.

3. The method of any preceding claim, wherein the link is presented in an application running in the first perimeter.

4. The method of any preceding claim, wherein an invocation module on the device determines whether to access the content using the application in the second perimeter.

5. The method of any preceding claim, further comprising using the application in the second perimeter to access the content by a network resource associated with the second perimeter.

6. The method of any preceding claim, further comprising automatically parsing the link and analyzing one or more components of the link to determine whether to use the application in the second perimeter to access the content.

7. The method of any preceding claim, wherein the first perimeter comprises an enterprise perimeter and the second perimeter comprises a personal perimeter.

8. The method of any preceding claim, wherein the link comprises a uniform resource locator (URL).

9. The method of any preceding claim, wherein the content comprises a web page.

10. One or more computer-readable media comprising instructions that are executable by data processing apparatus to perform the method of any preceding claim.

11. A device enabled to perform the method of any of claims 1-9.
